**Europäisches Patentamt**

**European Patent Office**

**Office européen des brevets**

(19)

(11) Veröffentlichungsnummer : **0 111 493**
**B1**

(12) **EUROPÄISCHE PATENTSCHRIFT**

(45) Veröffentlichungstag der Patentschrift :
**16.04.86**

(51) Int. Cl.⁴ : **H 02 M   3/155**

(21) Anmeldenummer : **83901359.6**

(22) Anmeldetag : **16.05.83**

(86) Internationale Anmeldenummer :
**PCT/CH 83/00063**

(87) Internationale Veröffentlichungsnummer :
**WO/8400085 (05.01.84 Gazette 84/01)**

(54) Schaltung zur Regelung der Ausgangsspannung eines Durchflusswandlers.

(30) Priorität : **14.06.82 CH 3657/82**

(43) Veröffentlichungstag der Anmeldung :
**27.06.84 Patentblatt 84/26**

(45) Bekanntmachung des Hinweises auf die Patenterteilung : **16.04.86 Patentblatt 86/16**

(84) Benannte Vertragsstaaten :
**AT BE CH DE FR GB LI LU NL SE**

(56) Entgegenhaltungen :
**DE-A- 2 356 452**
**DE-A- 2 757 637**
**GB-A- 1 152 295**
**US-A- 3 226 630**
**US-A- 3 453 521**
**US-A- 3 809 999**

(73) Patentinhaber : **Melcher, Domenic**
**Ackerstrasse 56**
**8610 Uster (CH)**

(72) Erfinder : **Melcher, Domenic**
**Ackerstrasse 56**
**8610 Uster (CH)**

(74) Vertreter : **Salgo, Reinhold Caspar**
**Usterstrasse 139**
**CH-8621 Wetzikon 4 (CH)**

**Beschreibung**

Die vorliegende Erfindung bezieht sich auf eine Regelschaltung zur Erzeugung einer geregelten Ausgangsspannung eines nach dem Durchflusswandlerprinzip arbeitenden Speisegerätes. Solche Speisegeräte sind an sich bekannt. Eine den Stand der Technik wiedergebende Darstellung von Schaltreglern und den Regelverfahren findet sich in der Veröffentlichung « Schaltnetzteile », herausgegeben von J. Wüstehube im Expert Verlag, Grafenau/VDE-Verlag, Berlin und den « Proceedings of the third international PCI81 Conference » München. Allgemein ist es das Ziel der angewendeten Regelverfahren, eine konstante Ausgangsspannung zu bewirken. Dann ist es gemeinsames Merkmal der bekannten Vorrichtungen, dass parallel zu den Ausgangsklemmen ein verhältnismässig grosser Kondensator geschaltet ist. Die diesem durch einen externen Verbraucher entnommene Ladung wird aus der Speicherinduktivität (Transformator-Wicklung oder Drossel) wieder zugeführt. Die Regelung der zuzuführenden Ladungsmenge wird in den bekannten Vorrichtungen so vorgenommen, dass aus der Ausgangsspannung $U_o$ des Reglers und einer Referenzspannung $U_{o\,soll}$ ein Steuersignal gewonnen wird, das die Ladezeit $t_{ein}$ innerhalb einer Periode $T = t_{ein} + t_{aus}$ entsprechend der benötigten Ladung

$$Q = \int_0^{t_{ein}} I_{Lade} \cdot dt \tag{1}$$

steuert.

Die bekannten Regelschaltungen beruhen also einerseits darauf, dass die Ausgangsspannung des Reglers um eine Differenz $\Delta U$ unterschritten werden kann, die gegeben ist durch die Grösse des Kondensators, des maximalen Ausgangsstromes sowie der Periodendauer, als der längstmöglichen Zeitdauer der Entladung ohne Ladungsnachschub, andererseits darauf, dass über die genannte Differenz $\Delta U$ nun die Dauer der Ladezeit $t_{ein}$ gesteuert wird.

Anhand der folgenden Zeichnung wird zunächst der Stand der Technik und dann der erfindungsgemässe Regler mit einigen Ausführungsbeispielen erläutert. Es zeigen

Figur 1   die bekannte Schaltung eines Schaltreglers
Figur 2   die dazugehörigen zeitlichen Verläufe der elektrischen Grössen
Figur 3   eine erfindungsgemässe Schaltung zur Erzeugung eines konstanten Produktes $U_i \cdot t_{ein}$
Figur 4   eine erfindungsgemässe Variante zu Fig. 3 zur Erzeugung eines Produktes $U_i \cdot t_{ein} = U_o \cdot T$
Figur 5   ein Ausführungsbeispiel einer erfindungsgemässen Regelschaltung
Figur 6   Das Schaltschema einer ersten erfindungsgemässen Regelschaltung
Figur 7   Das Schaltschema einer weiteren erfindungsgemässen Regelschaltung mit Netztrennung.

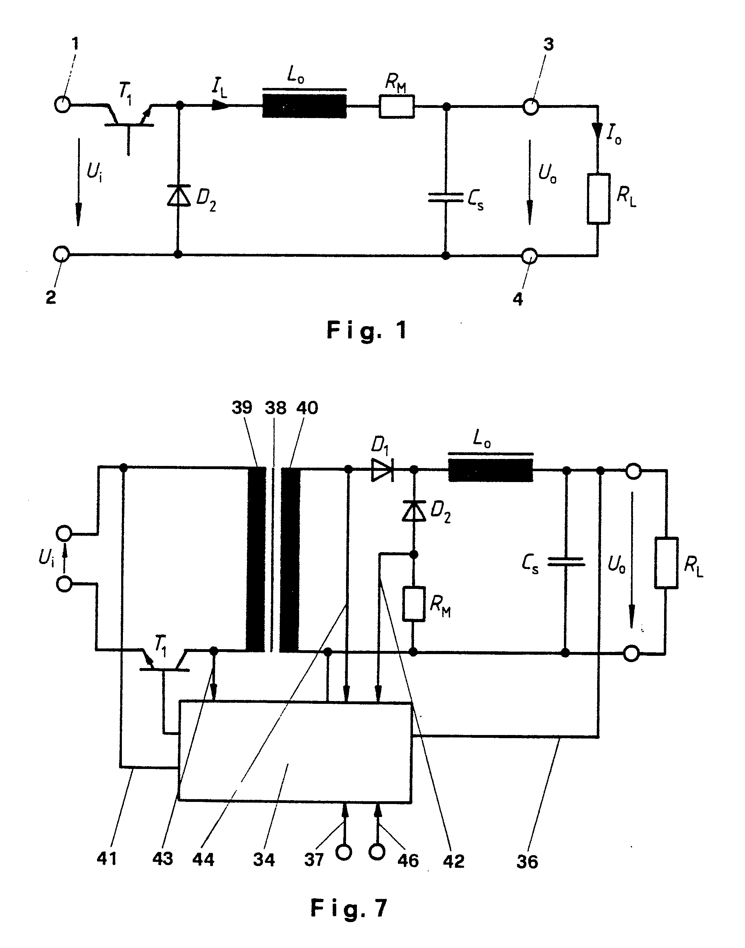

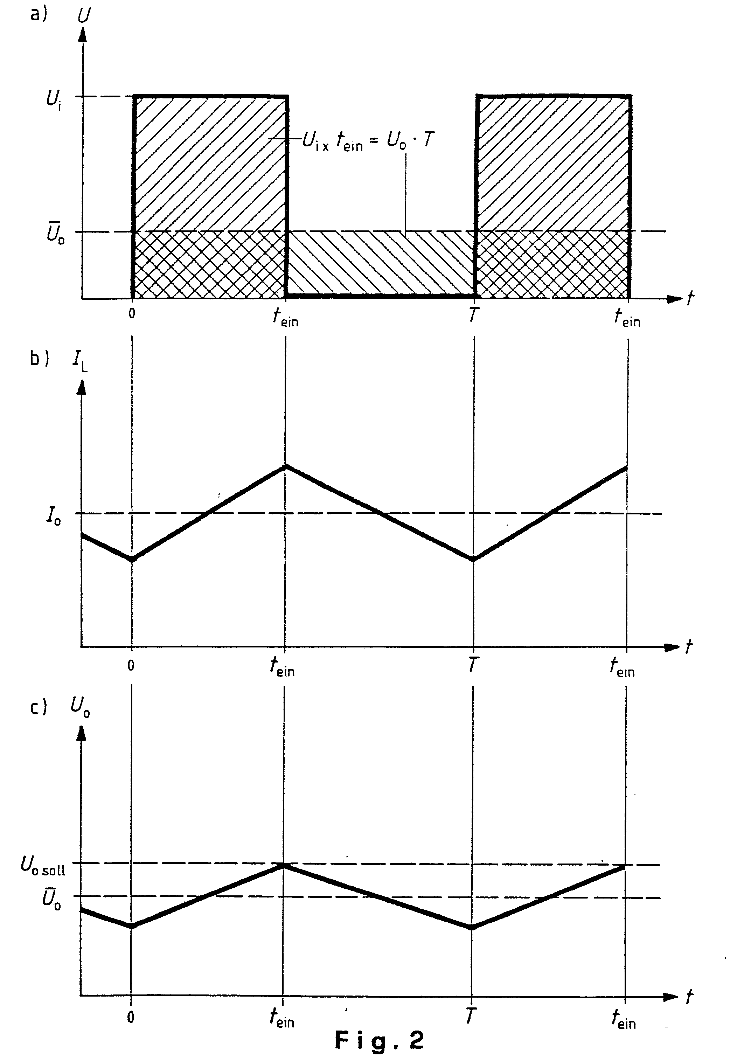

Die Schaltung gemäss Fig. 1 zeigt das bekannte Prinzip des Eintakt-Durchflusswandlers. In Fig. 2 sind die dazugehörigen elektrischen Grössen und Vorgänge dargestellt. Ueber zwei Eingangsklemmen 1,2 wird eine Eingangsspannung $U_i$ angelegt, die den in Fig. 2a gezeigten zeitlichen Verlauf hat : Während der Zeit $t_{ein}$ ist $U_i$ eingeschaltet, während der Zeit $T - t_{ein} = t_{aus}$ ist sie ausgeschaltet, wobei T die Periodendauer des — nicht gezeichneten — Taktgebers ist. Weiter ist ersichtlich, dass die Ausgangsspannung $U_o$ dem über eine Periode T gemittelten Wert von $U_i \cdot t_{ein}$ entspricht, also

$$\frac{U_o}{U_i} = \frac{t_{ein}}{T} \tag{2}$$

was streng nur für einen verlustlosen Wandler gilt.

Ueber einen Transistor $T_1$ fliesst nun ein Strom auf eine Speicherdrossel $L_o$, wobei der Strom den in Fig. 2b gezeigten zeitlichen Verlauf nimmt, sofern die durch einen Lastwiderstand $R_L$ dargestellte Last konstant ist. Damit hat die Ausgangsspannung $U_o$, die an den Ausgangsklemmen 3,4 anliegt, den in Fig. 2c gezeigten zeitlichen Verlauf. Aus Fig. 2c ist ersichtlich, dass das Erreichen der Soll-Spannung $U_{o\,soll}$ das Ende der Leitphase $t_{ein}$ definiert ; über hier nicht gezeichnete Schaltelemente wird $U_o$ gemessen, und bei $U_o = U_{o\,soll}$ das Ausschalten bewirkt. Dies hat zur Folge, dass die Soll-Ausgangsspannung $U_{o\,soll}$ immer nur höchstens erreicht, meist aber unterschritten wird, ferner, dass dann, wenn der Schaltregler keinen oder nur einen sehr kleinen Ausgangsstrom zu liefern hat, oder bei Kurzschluss des Ausganges, die Leitphase $t_{ein}$ für die heute verwendeten Leistungs-Schalthalbleiter schwer beherrschbar kurz wird. Die Aufgabe der vorliegenden Erfindung ist es, die genannten Nachteile zu überwinden, und das Kurzschluss- und Parallelschaltungsverhalten von erfindungsgemässen Schaltreglern zu verbessern.

Die erfindungsgemässe Regelschaltung beruht auf dem Verfahren, dass die Länge der Leitphase gesteuert und die Länge des Pulspause abhängig vom Istwert der Ausgangsspannung geregelt wird.

Dieses Verfahren ist an sich bekannt aus der US-A-3 453 521. Die dort beschriebene Regelschaltung steuert die Pulspause jedoch nur, falls der Sollwert der Ausgangsspannung überschritten wird.

In der vorliegenden erfindungsgemässen Regelschaltung wird jedoch das Unterschreiten der Sollwert-Spannung als Stellgrösse verwendet, da einerseits das unstetige Zuschalten von Lasten in der Praxis das häufigere — und ernstere — zu lösende Problem ist, anderseits Aenderungen der Eingangsspannung bereits durch die Steuerung der Leitphase berücksichtigt sind.

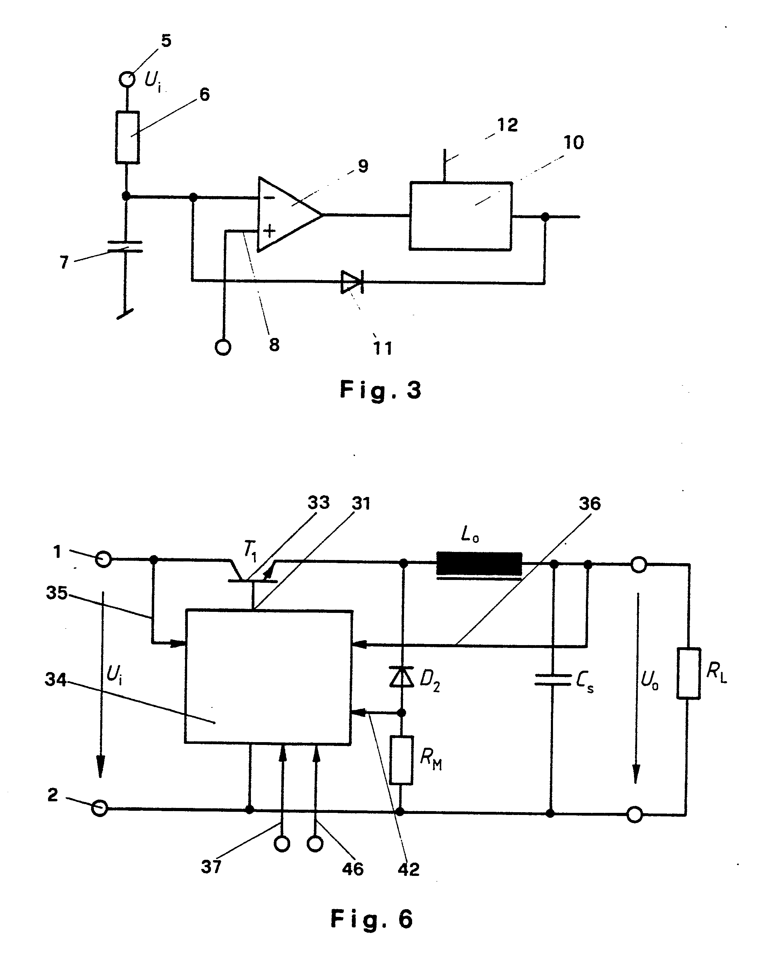

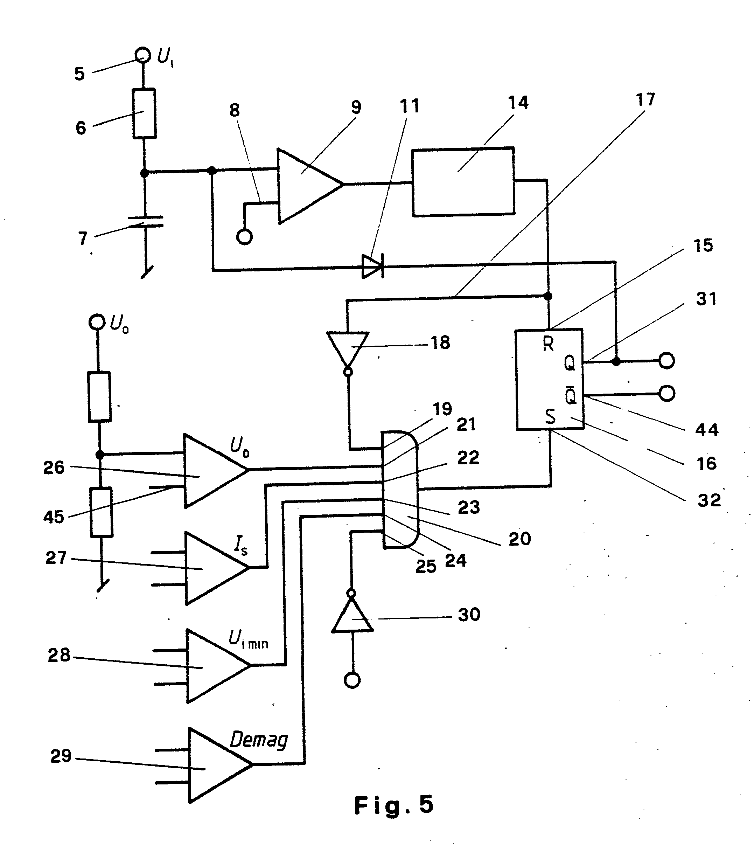

Fig. 3 zeigt eine Schaltung zur Erzeugung eines konstanten $U_i \cdot t_{ein}$-Produktes. An einer Klemme 5 wird die Spannung $U_i$ angelegt, die über einen Widerstand 6 einen Kondensator 7 auflädt auf eine Spannung $U_C$, die durch eine an einen Eingang 8 eines Differentialverstärkers 9 angelegte Referenzspannung $U_{Ref}$ festgelegt ist. Erreicht $U_C$ den vorgewählten Wert $U_{Ref}$, so bewirkt der Differentialverstärker über eine Logik 10 das in Fig. 2a gezeigte Null-Setzen von $U_i$; gleichzeitig wird der Kondensator 9 über eine Diode 11 entladen und, bis auf einer Leitung 12 ein entsprechender Befehl an die Logik 10 übermittelt wird, im entladenen Zustand gehalten. Eine nicht gezeichnete Variante enthält anstelle der Diode 11 einen Transistor, der beispielsweise von einem weiteren Ausgang 44 des Flip-Flops 16 gesteuert wird, welcher Ausgang bezüglich des Ausganges 31 das invertierte Signal liefert (siehe Fig. 5).

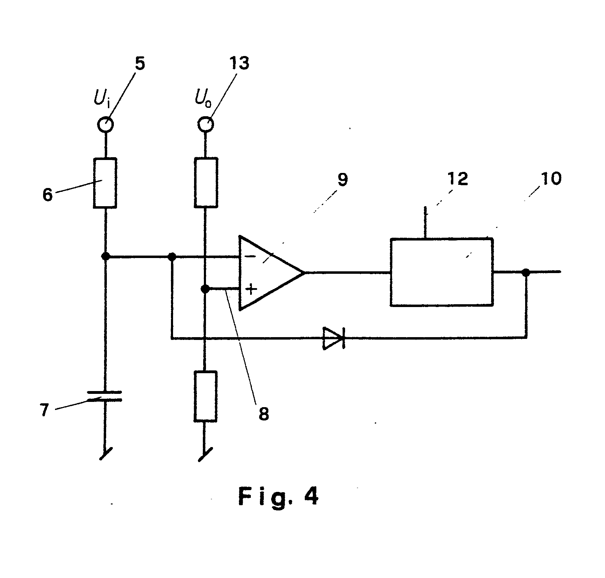

Die erfindungsgemässe Regelschaltung bezieht sich jedoch auch auf variable Ausgangsspannungen, z. B. solche, die nach einer vorgegebenen Funktion variieren. Fig. 4 zeigt den Schaltkreis von Fig. 3 für den genannten Fall einer variablen Ausgangsspannung $U_o$. Anstelle der festen Referenzspannung $U_{Ref}$ liegt am Eingang 8 des Differentialverstärkers 9 eine durch Teilung aus $U_o$ gewonnene Referenzspannung $p \cdot U_o$ an. Die Länge der Leitphase verhält sich dann umgekehrt proportional zu $U_i$ und proportional zu $U_o$ bei konstanter Schaltfrequenz $1/T$.

Nach Ablauf der in der beschriebenen Art gesteuerten Leitphase folgt die geregelte Pulspause. Diese Pause dauert so lange, bis die Ausgangsspannung $U_o$ auf einen von der Referenzspannung definierten Wert abgesunken ist. Nach Ablauf dieser Pause erfolgt erneut eine gesteuerte Leitphase, womit die Vorgänge repetitiv werden.

In Fig. 5 ist ein erstes Ausführungsbeispiel einer Regelschaltung für einen Durchflusswandler im Schema dargestellt. Es finden sich die mit 5 bis 9 bezeichneten Schaltelemente aus Fig. 3 auch hier wieder, sowohl wie die Diode 11, und zwar in der gleichen Schaltung. Was in Fig. 3 pauschal mit Logik 10 bezeichnet ist, wird hier in Fig. 5 spezifiziert:

Der Ausgang des Differentialverstärkers 9 steuert ein Monoflop 14 an, das seinen Ausgangspuls auf den Reset-Eingang 15 eines Flip-Flops 16 abgibt. Derselbe Puls wird über eine Leitung 17 auch an einen Inverter 18 geliefert, dessen Ausgang einen mit 19 bezeichneten Eingang eines Mehrfach-UND-Tores 20 belegt. Dieses Mehrfach-UND-Tor 20 weist weitere Eingänge 21 bis 25 auf; wie später gezeigt wird, ist deren Anzahl nicht an sich beschränkt. Die Eingänge 21 bis 24 des Mehrfach-UND-Tores 20 beziehen ihre Steuersignale von 4 Differentialverstärkern 26, 27, 28, 29. Der Differentialverstärker 26 vergleicht die Ausgangsspannung $U_o$ des Schaltreglers mit einer vorgegebenen Referenzspannung $U_{o\,soll}$, die am Referenzeingang 45 angelegt wird; der Differentialverstärker 27 überwacht den Kurzschlussstrom, beispielsweise über einen Messwiderstand $R_M$ (siehe Fig. 1). Durch den Differentialverstärker 28 wird beispielsweise die Eingangsspannung $U_i$ daraufhin überwacht, dass ein vorgegebener Wert $U_{i\,min}$ nicht unterschritten wird, und der Differentialverstärker 29 schliesslich überwacht beispielsweise den vorgeschalteten — nicht gezeichneten — Transformator auf das Abklingen des Demagnetisierungsstromes.

Am Eingang 25 des Mehrfach-UND-Tores 20 ist hier ein Inverter 30 angeschlossen, an den ein Sperr-Signal angelegt werden kann. Das erfindungsgemässe Zusammenwirken dieser Schaltelemente geschieht folgendermassen:

Der Eingangskreis, bestehend aus den mit 5 bis 9 und 11 bezeichneten Schaltelementen produziert am Ausgang des Differentialverstärkers 9 einen Steuerpuls, sofern die Spannung am Kondensator 7 mit der am Eingang 8 anliegenden Referenzspannung übereinstimmt. Dieser Steuerpuls steuert seinerseits das Monoflop 14, das einen Resetpuls konstanter Länge an den Reset-Eingang 15 des Flip-Flops 16 abgibt; das Flip-Flop 16 springt dadurch an seinem Q-Ausgang 31 auf 0, wodurch der Kondensator 7 über die Diode 11 entladen wird und in diesem Zustande verbleibt, bis am Set-Eingang 32 des Flip-Flops 16 ein Set-Signal anliegt. Dies ist dann der Fall, wenn alle Eingänge 19 bis 25 des Mehrfach-UND-Tores 20 hoch liegen, also beispielsweise folgende Bedingungen herrschen:

— die Ausgangsspannung $U_o$ ist bis auf $U_{o\,soll}$ abgesunken (Differentialverstärker 26)

— die Eingangsspannung ist grösser als ein vorgegebener Mindestwert $U_{i\,min}$ (Differentialverstärker 28)

— der Transformator ist soweit demagnetisiert, dass er durch eine neue Leitphase nicht gesättigt wird (Differentialverstärker 29)

— Es liegt kein Sperrsignal am Inverter 30.

Das Flip-Flop 16 wird nun ungesteuert, wodurch am Q-Ausgang 31 das Signal « hoch » erscheint: Der Kondensator 7 kann wieder geladen werden.

Das Signal am Q-Ausgang 31 wird dann als Steuersignal benützt, um das Leistungsventil 33 des Schaltreglers, gemäss Fig. 6 zu betätigen. Dort — in Fig. 6 — ist die Schaltung gemäss Fig. 1 wieder aufgenommen worden, nun mit der erfindungsgemässen Vorrichtung, beispielsweise nach Fig. 5, die durch einen Schaltungsblock 34 dargestellt ist. Inhaltlich stimmt der Schaltungsblock 34 genau mit der Fig. 5 überein, bis auf die Ueberprüfung der Demagnetisierung mittels des Differentialverstärkers 29, der hier weggelassen ist.

An den Eingangsklemmen 1,2 liegt die Eingangsspannung $U_i$, die an den Kollektor des Leistungs-

3

ventils 33 und gleichzeitig mittels einer Leitung 35 in den Schaltungsblock 34 eingeführt ist, wo sie — gemäss Fig. 5 — einerseits zur Pulslängenbestimmung, andererseits am Differentialverstärker 28 zu Ueberprüfen des Minimalwertes herangezogen wird. Ueber eine Leitung 36 gelangt die Ausgangsspannung $U_o$ in den Schaltungsblock 34 und bestimmt dort die Länge der Pause zwischen den Ladepulsen. Ueber eine weitere Leitung 37 kann, wie zu Fig. 5 ausgeführt und dort auf den Inverter 30 wirkend, ein Inhibit-Signal an den Schaltregler angelegt werden. Eine Leitung 42 führt dem Schaltungsblock 34 den Spannungsabfall über dem Messwiderstand $R_M$ zu, womit eine Begrenzung des Ausgangsstromes ermöglicht ist. Befindet sich die Schaltung im Ueberstrombereich oder im Kurzschluss, so wird die Pulspause verlängert, bis der Differentialvertärker 27 ein Absinken des Stromes unter den Maximalwert meldet.

Die Möglichkeit der Ausgangsstrommessung im Kreis der Diode D2 hat den Vorteil, den Messwiderstand $R_M$ am Systembezugspunkt anschliessen zu können, was die Schaltungstechnik wesentlich vereinfacht. Soll die Ausgangsspannung $U_c$ des Wandlers gemäss Fig. 6, einer von aussen vorgegebenen Referenzspannung entsprechen, so kann diese — sei sie zeitlich konstant oder variabel — über eine Leitung 46 dem Schaltungsblock 34 zugeführt werden. Im Schaltungsblock 34 wird die Leitung 46 direkt oder beispielsweise über einen nicht gezeichneten Spannungsteiler, an den Referenzeingang 46 des Differentialverstärkers 26 gelegt. In Fig. 7 ist ein Eintakt-Durchflusswandler mit Netztrennung dargestellt. Inbegriffen in der Netztrennung ist eine allfällige Spannungsüber- oder Untersetzung mit Hilfe eines Transformators 38, mit Primärwicklung 39 und Sekundärwicklung 40. Wiederum ist die erfindungsgemässe Schaltung — ausführlich dargestellt in Fig. 5 — vereinfacht gezeichnet als Schaltungsblock 34. Zwei Leitungen 41,43 führen die Eingangsspannung $U_i$ in den Schaltungsblock 34, wo sie in gleicher Weise wirkt, wie zu Fig. 6 ausgeführt. Die Aufgabe der Leitungen 36,42 ist ebenfalls dieselbe, wie in Fig. 6. Zusätzlich ist hier eine Leitung 44 vorgesehen, mit deren Hilfe die Demagnetisierung des Transformators 38 überwacht wird. In diesem Fall enthält der Schaltungsblock 34 den in Fig. 5 gezeigten Differentialverstärker 29.

Die Leitung 46 hat hier die gleiche Aufgabe, wie im Ausführungsbeispiel gemäss Fig. 6.

**Patentansprüche**

1. Regelschaltung zur Erzeugung einer geregelten Ausgangsspannung eines nach dem Durchflusswandlerprinzip arbeitenden Speisegerätes, dadurch gekennzeichnet, dass

— sie besteht aus einem Kondensator (7), der über einen Widerstanstand (6) von der Spannung U aufgeladen wird bis zu einem mit einem Differentialverstärker (9) definierten Referenzwert,

— sie ferner besteht aus einem Monoflop (14), einer Diode (11) und einem Flip-Flop (16) mit Set-Eingang (32), Reset-Eingang (15) und einem Ausgang (31), welche genannten Elemente so verbunden sind, dass das vom Differentialverstärker (9) angesteuerte Monoflop (14) einen Rücksetz-Puls an den Reset-Eingang (15) des Flip-Flops (16) abgibt und den Kondensator (7) über die Diode (11) vom nun « tief » liegenden Ausgang (31) des Flip-Flops (16) entladen wird,

— ferner mit dem Set-Eingang (32) des Flip-Flops (16) ein Mehrfach-UND-Tor (20) verbunden ist, das mindestens zwei Eingänge (19), (21) aufweist, deren einer von einem Inverter (18), deren anderer von einem Differentialverstärker (26) gespeist ist, wobei der Inverter (18) über eine Leitung (17) ebenfalls vom Monoflop (14) angesteuert wird, und der Differentialverstärker (26) die Ausgangsspannung U mit einer Referenzspannung vergleicht und erst bei Uebereinstimmung ein Signal auf den Eingang (21) des Mehrfach-UND-Tores (20) gibt.

2. Regelschaltung nach Patentanspruch 1, dadurch gekennzeichnet, dass noch mindestens ein weiterer von drei Differentialverstärkern (27, 28, 29) vorhanden ist, dessen Ausgang mit einem Eingang mit einem Eingang (22, 23, 24) des Mehrfach-UND—Tores (20) verbunden ist, wobei mit dem Differentialverstärker (27) der Kurzschlussstrom, mit dem Differentialverstärker (28) die minimale Eingangsspannung und mit dem Differentialverstärker (28) die Demagnetisierungsspannung überwacht wird.

3. Regelschaltung nach Patentanspruch 1 oder 2, dadurch gekennzeichnet, dass ein Inverter (30) vorhanden ist, dessen Ausgang am Eingang (25) des Mehrfach-UND-Tores (20) liegt, womit die Erzeugung eines Pulses aktiv unterdrückt werden kann.

4. Regelschaltung nach Patentanspruch 1, 2 oder 3, dadurch gekennzeichnet, dass anstelle einer Diode (11) ein Transisstor vorhanden ist.

**Claims**

1. An apparatus for the generation of a regulated output voltage, operating after the chopper principle characterized in that

— it comprises a condensor (7), a resistor (6), and a differential amplifier (9) whereby the condensor (7) is being charged via the resistor (6) by a source voltage $U_i$ until it reaches a reference value defined by the differential amplifier (9),

— it further comprises a monostable multivibrator (14), a diode (11), a flip-flop (16) with a set input (32), a reset input (15), and an output (31), these named elements being connected in such a way, that the monostable multivibrator (14), controlled by the differential amplifier (9), generates a reset pulse transmitted to the reset input (15) of the flip-flop (16), whereby the condensor (7) is discharged via the diode (11) by the output (31) of the flip-flop (16) now being in the « O »-state,

— it is further comprises a multiple AND-gate (20) with at least two input connectors (19, 21), which AND-gate (20) is connected to the set input (32) of the flip-flop (16), the one input connector (19) being actuated by an inverter (18) the other one (21) by a differential amplifier (26), this said inverter (18), being actuated by the monostable multivibrator (14) via a lead (17), and this said differential amplifier (26) comparing the output voltage U with a reference voltage, and in case of coincidence, transmitting a pulse to the input connector (21) of the said multiple AND-gate (20).

2. An apparatus according to claim 2, characterized in that it comprizes at least one further of the differential amplifiers (27, 28, 29), the output of which is connected to one of the input connectors (22, 23, 24) of the said multiple AND-gate (20), whereby the differential amplifier (27) monitors the short circuit current, the differential amplifier (28) monitors the input voltage and the differential amplifier (29) monitors the demagnetization.

3. An apparatus according to claims 2 or 3, characterized in that it comprizes an inverter (30) the output of which is connected to the input connector (25) of the multiple AND-gate (20), whereby generation of a pulse can be actively inhibited.

4. An apparatus according to claims 2, 3, or 4 characterized in that it comprizes a transistor instead of a diode (11).


## Revendications

1. Circuit de régulation servant à produire une tension de sortie réglée dans un appareil d'alimentation fonctionnant selon le principe d'un convertisseur statique, caractérisé en ce que :

— il comprend un condensateur (7) qui est chargé, à travers une résistance (6), par la tension U jusqu'à une valeur de référence définie par un amplificateur différentiel (9),

— il comprend en outre un multivibrateur monostable (14), une diode (11) et une bascule bistable (16) comportant une entrée de positionnement (32), une entrée de remise à l'état initial (15) et une sortie (31), les éléments précités étant reliés de telle façon que le multivibrateur monostable (14) piloté par l'amplificateur différentiel (9) envoie une impulsion de remise à l'état initial à l'entrée de remise à l'état initial (15) de la bascule bistable (16) et que le condensateur (7) se décharge, à travers la diode (11), à partir de la sortie (31) située alors au niveau « bas » de la bascule bistable (16), et

— en outre, à l'entrée de positionnement (32) de la bascule bistable (16), se trouve raccordée une porte ET à plusieurs entrées (20) qui comporte au moins deux entrées (19), (21) dont l'une est alimentée par l'intermédiaire d'un inverseur (18) et dont l'autre est alimentée par un amplificateur différentiel (26), l'inverseur (18) étant commandé également par le multivibrateur monostable (14) par l'intermédiaire d'une ligne (17), et l'amplificateur différentiel (26) compare la tension de sortie U à une tension de référence et délivre uniquement en cas de coïncidence, un signal à l'entrée (21) de la porte ET (20).

2. Circuit de régulation selon la revendication 1, caractérisé en ce qu'il est encore prévu au moins l'un de trois amplificateurs différentiels supplémentaires (27, 28, 29), dont la sortie est reliée à une entrée (22, 23, 24) de la porte ET (20) le courant de court-circuit étant contrôlé par l'amplificateur différentiel (27), la tension d'entrée minimale étant contrôlée par l'amplificateur différentiel (28) et la tension de démagnétisation étant contrôlée par l'amplificateur différentiel (28).

3. Circuit de régulation selon la revendication 1 ou 2, caractérisé en ce qu'il est prévu un inverseur (30) dont la sortie est raccordée à l'entrée (25) de la porte ET (20), ce qui permet de supprimer de façon efficace la génération d'une impulsion.

4. Circuit de régulation selon la revendication 1, 2 ou 3, caractérisé en ce qu'un transistor est présent à la place d'une diode (11).

0 111 493

Fig. 1

Fig. 7

1

a)

$U_i \times t_{ein} = U_o \cdot T$

b)

c)

**F i g . 2**

**Fig. 3**

**Fig. 6**

**Fig. 4**

**Fig. 5**